Europäisches Patentamt

European Patent Office

Office européen des brevets

(11) Veröffentlichungsnummer: **0 314 611**
**A1**

## (12) EUROPÄISCHE PATENTANMELDUNG

(21) Anmeldenummer: 88810593.9

(22) Anmeldetag: 29.08.88

(51) Int. Cl.⁴: **F 02 N 11/08**
**B 60 K 20/00**

(30) Priorität: 29.08.87 CH 3317/87

(43) Veröffentlichungstag der Anmeldung:
03.05.89 Patentblatt 89/18

(84) Benannte Vertragsstaaten:
DE ES FR GB IT SE

(71) Anmelder: **Gregosits, Imre**
**Brunnenhöfli 12**
**CH-6012 Obernau (CH)**

(72) Erfinder: **Gregosits, Imre**
**Brunnenhöfli 12**
**CH-6012 Obernau (CH)**

(74) Vertreter: **Arato, Laszlo**
**Seebuchtstrasse 19**
**CH-6374 Buochs (CH)**

Die Bezeichnung der Erfindung wurde geändert (Richtlinien für die Prüfung im EPA, A-III, 7.3).

(54) **Bedieneinrichtung für eine Stop-Start-Automatik.**

(57) Es wird die Integration der Bedienbarkeit des Schalters für die Stop-Start-Automatik (3) von Benzin- oder Gasmotoren in Kraftfahrzeugen zusammen mit einem Bedienungshebel vorgeschlagen, damit der Aufwand der Betätigung vom Kraftfahrer erheblich reduziert werden kann. Dank Reduktion des Bewegungsablaufes wird der Bedienungsaufwand bis zu 50 % reduziert. Im Stadtverkehr oder bei Staus bewirkt die Anwendung dieser Technik die erhebliche Reduktion des Kraftstoffverbrauches und dadurch schädlicher Emissionen.

Fig. 2

EP 0 314 611 A1

## Beschreibung

## Bedienung von Stop-Start-Automatik

Die vorliegende Erfindung bezieht sich auf die Integration der Bedienbarkeit eines Schalters nach dem Oberbegriff des Patentanspruches 1.

Bekannt ist, dass durch einen Tastschalter die Bedienung des Zündschlüsselschalters für das Abstellen und Starten des Motors eines Kraftfahrzeuges vereinfacht werden kann. Dabei wird die Funktion des Zündschlüsselschalters als Lenk- und Zünkschloss und somit als Schutzmassnahme gegen unerlaubte Benützung des Fahrzeuges beibehalten, aber für den wiederholten Stop-Start-Betrieb, z.B. bei Verkehrsstaus, die einfachere Bedienung eines Tastschalters geboten. Die Vereinfachung besteht eigentlich darin, dass die Drehbewegung des Zündschlüsselschalters durch eine einfachere Betätigung mittels Tastschalter ersetzt wird. Die Realisierung dieser Vereinfachung beim Stoppen besteht darin, dass die Zündung (Versorgung des Zündspule mit Strom) unterbrochen wird. Beim Starten muss die Stromversorgung der Zündspule bei gleichzeitiger Bewegung des Treibmechanismus des Motors einsetzten. Die Kraft zur Bewegung des Treibmechanismus muss deshalb so lange dem Motor von aussen zugeführt werden, bis dieser selbsttätig als Kraftmaschine funktioniert. Die Arbeitsmaschine, die diese Kraft dem Verdrennnungmotor zuführt, ist ein Elektromotor, der Anlasser genannt wird. Während der Anlasser nur beim Startvorgang unter Strom steht, muss die Zündung bis zum Stoppen des Motors eingeschaltet sein. Damit wahlweise der Tastschalter zum Stoppen oder Starten durch eine einfache Druckbewegung benützt werden kann, wird zum Tastschalter eine sogennante Stop-Start-Automatik benötigt. Solche Stop-Start-Automatik stellt die Firma Westfälische Metall Industrie KG, Hueck & Co., D-4780 Lippstadt, unter der Marke HELLA für den nachträglichen Einbau in Kraftfahrzeuge her. Im Prospekt dieser Firma wird der Einbau des Tastschalters (Druckasters)"... am Armaturenbrett oder an der Konsole ..." vorgeschalgen (vgl. S. 5. Pkt. 4.3, Abs. 3). Bei einem Kraftfahrzeug mit automatischem Getriebe besteht der Bewegungsablauf der rechten Hand des Kraftfahrers bei Stoppvorgang und Anordnung des Tastschalters am Armaturenbrett aus den Bewegungen

    a - Loslassen des Handrades

    b - Handbewegung vom Lenkrad zum Tastschalter

    c - Betätigung des Tastschalters (Drücken) durch einen Finger

    d - Handbewegung vom Tastschalter zum Wählhebel

    e - Handbewegung zur Betätigung des Wählhebels in Stellung P oder N

    f - Handbewegung vom Wählhebel zum Lenkrad

Die Bewegungsabläufe des Startvorganges eines Kraftfahrzeuges mit automatischem Getriebe sind einiges aufwendiger, und noch aufwendiger sind die Bewegungsabläufe bei einem Kraftfahrzeug mit herkömmlichem Getriebe, wo zusätzlich die Bedienung des Kupplungspedals mit dem linken Fuss des Kraftfahrers erfolgen muss.

Der Vorteil der Stop-Start-Automatik liegt daher nicht in der bis zur Zeit gelungenen Reduktion des Bedienungsaufwandes, sondern in der Feststellung, dass die konsequente Anwendung dieser Technik zur Kraftstoffeinsparung von 10 - 15 % und somit zur Reduktion der Emissionen führt. Die letztere Festellung hat lärm- und abgasgeplagte Gemeinschaften resp. deren Behörden veranlasst, die Kraftfahrer durch Polizeibussen zum Abstellen den Motoren von Kraftfahrzeugen bei Staus oder bei Warten vor rotem Ampellicht nach 3 Sekunden Standzeit mit laufendem Motor zu zwingen (z.B. Stadt Baden im Kanton Aargau/Schweiz). Zugleich beweist dieser Tatbestand, dass die Anreize, die durch die Kosteneinsparung beim Stop-Start-Betrieb entstehen, zu gering sind, um diese Massnahmen aus eigenem Interesse anzuwenden.

Ziel der Erfindung ist daher, den Bedienungsaufwand, wie in den Ansprüchen dargestellt, so zu reduzieren, dass die Kraftwagenfahrer die Benützung solcher Vorrichtungen bereitwillig und bei jeder sich bietenden Gelegenheit (ohne äusseren Zwang) akzeptieren und somit anwenden. Erfindungsgemäss hat diese Aufgabe dadurch eine Lösung gefunden, dass die Bedienbarkeit der Stop-Start-Automatik durch die Integration des Schalters dieser Steuerung in einen vom Fahrzeuglenker ohnehin zu bedienenden Bedienungshebel erfolgt ist. Solche Bedienungshebel, wie der Wählhebel der automatischen Getriebe oder der Schalthebel der Fahrzeuggetriebe bei nicht automatisch schaltenden Fahrzeugen, können entweder bei der Herstellung oder bei bereits vorhandenen Fahrzeugen so ausgebildet werden, dass die für die intergrierte Bedienbarkeit erforderliche Mehrfachbelegung der Bedienungshebel sich realisieren lässt. Dabei wird der Schalter vorteilhafterweise bei neuen Fahrzeugen bei der Herstellung im Griff des Bedienungshebels so integriert, dass mit dem Daumen die Bedienung des Schalters bei Betätigung des Bedienungshebels durch die Hand ohne zusätzliche Armbewegung erfolgen kann. Durch diese Massnahme wird der Aufwand an Bedienung zum Stoppen und Starten des Motors erheblich reduziert. Entscheidend ist dabei nicht die körperliche Leistungseinsparnis, sondern die Reduktion der neurophysiologischen Ursachen der Ermüdung, mit anderen Worten die Zahl der Bedienungsschritte.

Bei der Integration der Bedienbarkeit des Tastschalters einer Stop-Start-Automatik zusammen mit einem Bedienungshebel für den Kraftfahrer, z.B. der Wahlhebel eines Fahrzeuges mit automatischem Getriebe, reduziert sich der Bewegungsaufwand im Vergleich zu der obigen Aufstellung durch den Wegfall des Bedienungsschrittes "d". Diese Reduktion entspricht etwa 25% des eingangs gezeigten bedienungsaufwandes oder sogar bis zu 50 %, wenn der Kraftfahrer seine Hand am Wahlhebel bis zum Startvorgang ruhen lässt, und dadurch der Bedienungsschritt "f" auch wegfällt. Dabei reduziert der Kraftfahrer den Bedienungsaufwand des folgenden Startvorganges ebenfalls, denn dieser beginnt durch die gleichzeitige Bedienung des Wahlhebels mit der Betätigung des Tastschalters zum Starten des Motors.

Nachfolgend sollen einige Ausführungsmöglichkeiten der Erfindung anhand der Figuren näher beschrieben werden:

Fig. 1 zeigt das elektrische Schaltschema einer Stop-Start-Automatik mit Klemmenbezeichnungen nach DIN 72552

Fig. 2 zeigt den Wahlhebel eines Kraftfahrzeuges für automatische Getriebe und mit serienmässig eingebautem Tastschalter,

Fig. 3 zeigt den Wahlhebel eines Kraftfahrzeuges mit nachgerüsteter Stop-Start-Automatik und angebautem Tastschalter am Wahlhebel,

Fig. 4 zeigt den Schalthebel eines Kraftfahrzeuges mit serienmässig eingebautem Tastschalter.

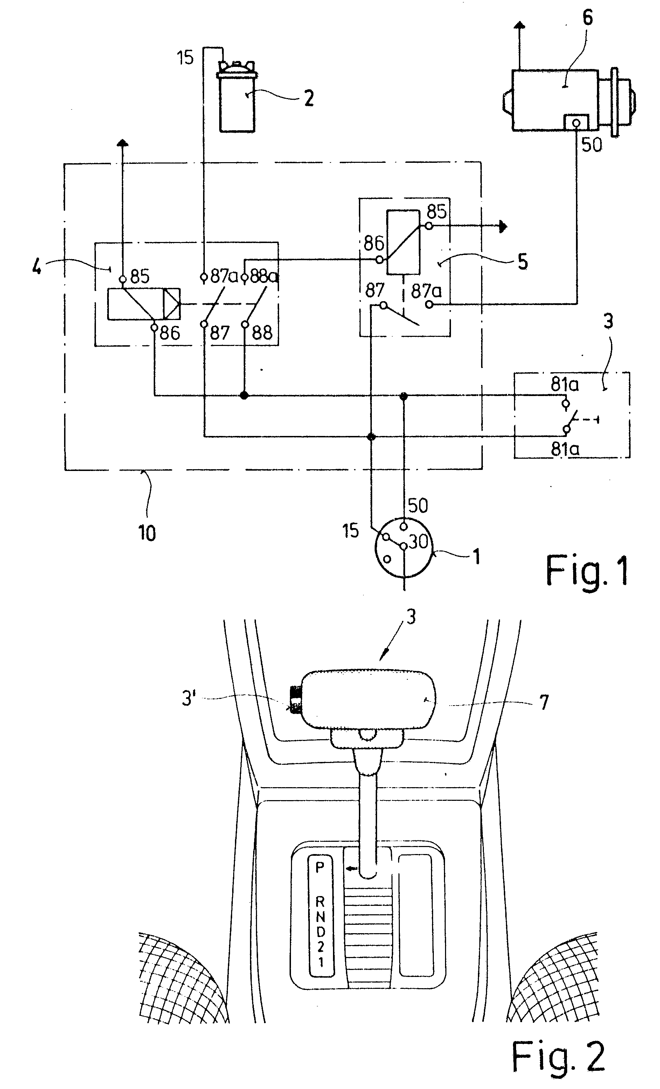

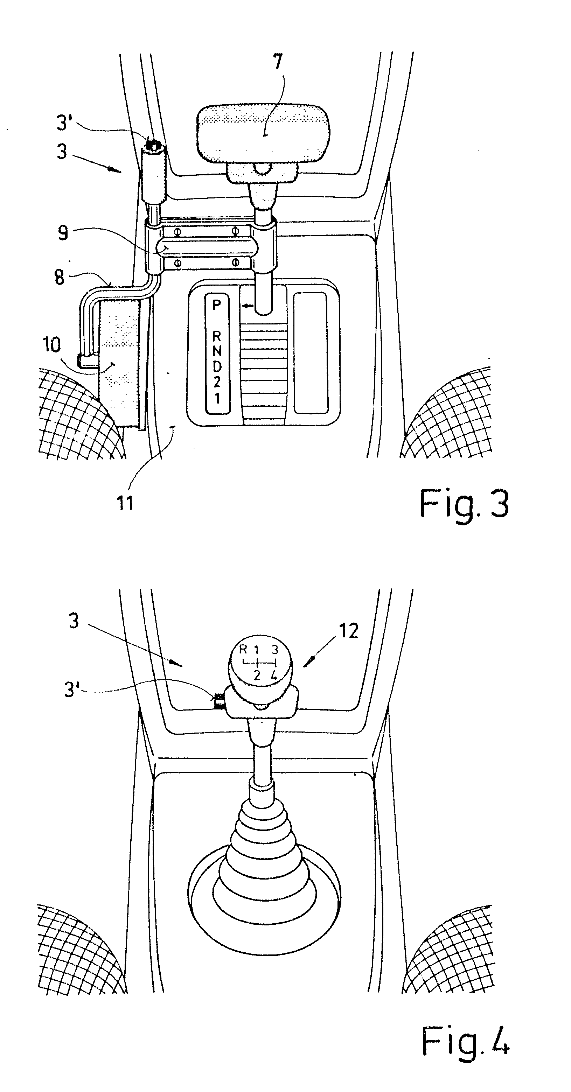

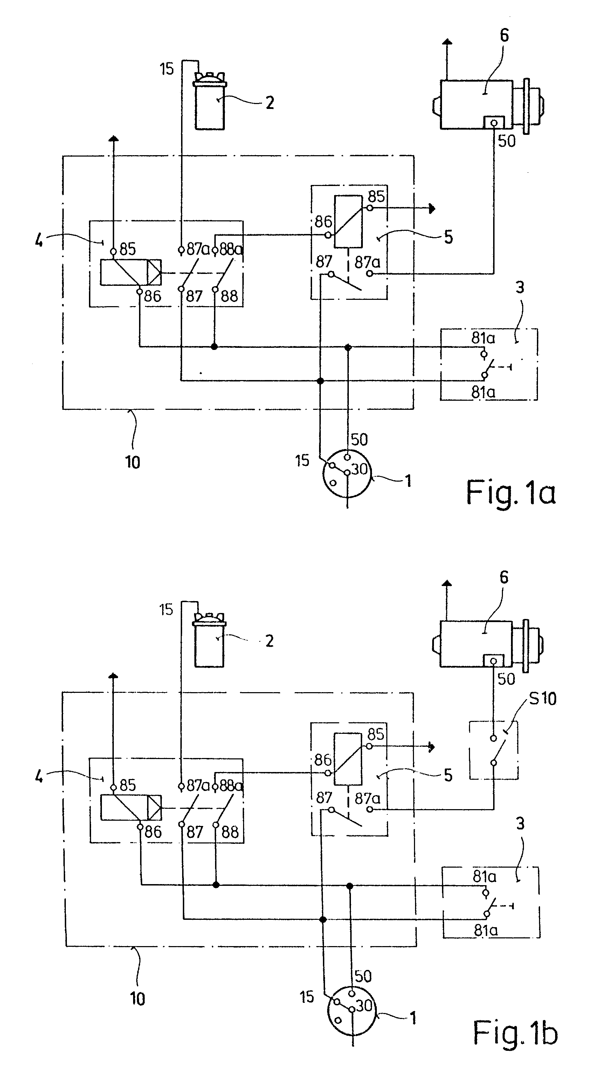

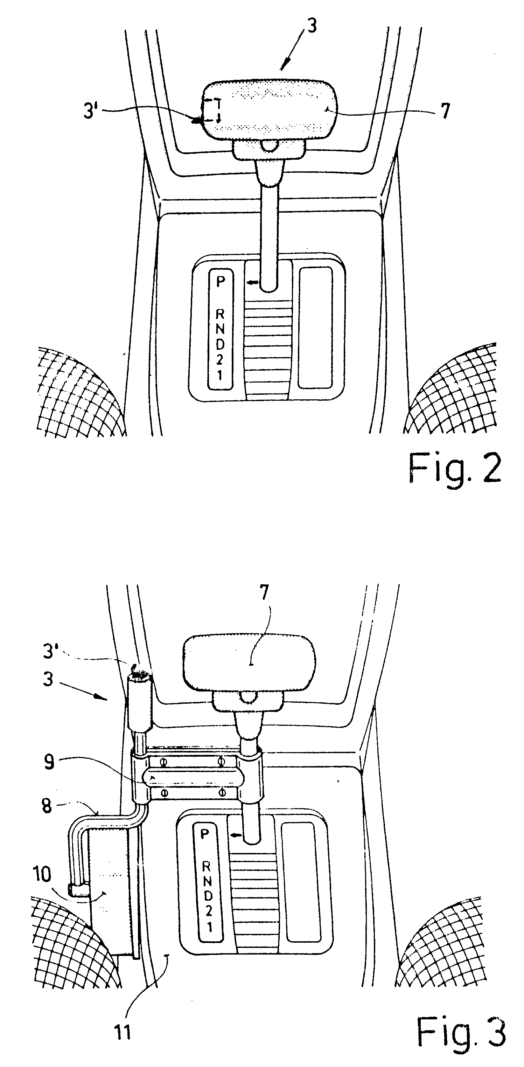

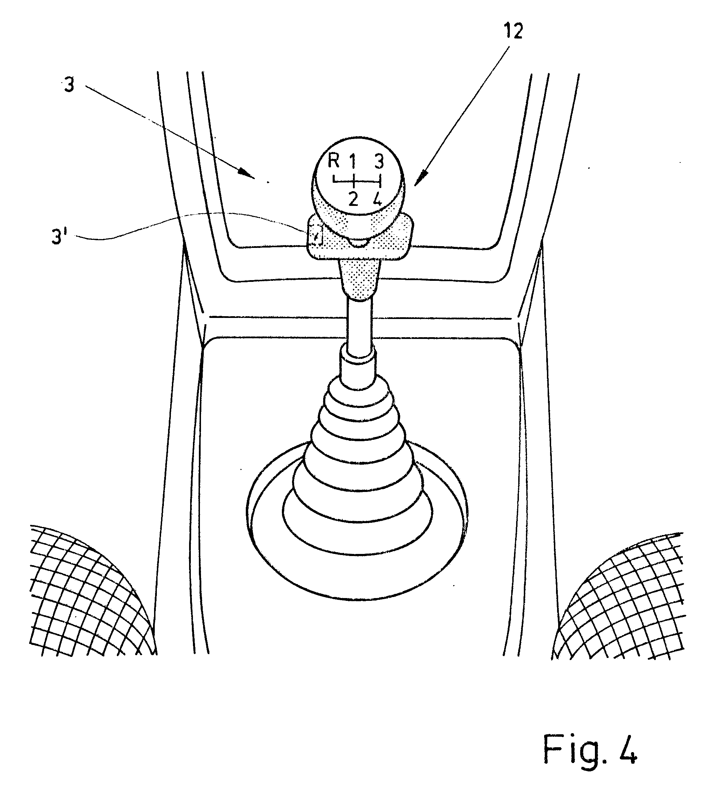

Die Klemme 30 des in Fig. 1 gezeigten Zündschlüsselschalters 1 ist stets stromführend. Gemäss Darstellung fliesst daher Strom in der gezeigten Zündschlüsselschaltung "Zündung eingeschaltet" auf dei Klemme 15 des Zündschlüsselschalters1 und auf die Klemme 15 der Zündspule 2, wenn der Tastschalter 3 eingeschaltet und daher die Klemme 81a und zugleich die Klemmen 85, 86 der Erregerspule des Impulsrelais 4 unter Strom stehen. Dabei fliesst zwischen die Kontakte 87, 87a des Impulsrelais 4 Strom auf die Zündspule 2 und zugleich durch die Kontakte 88, 88a auf die Kontakte 85, 86 der Erregerspule des Relais 5, wobei zugleich von der Klemme 15 des Zündschlüsselschalters 1 dann via der Kontakte 87, 87a auf der Klemme 50 des Anlassers 6 ebenfalls Strom fliesst. Kehrt anschliessend der Tastschalter 3 in seine Ruhelage gemäss Figur 1 zurück, so wird die Stromführung der Kontakte 85, 86 des Impulsrelais 4 und die Kontakte 87, 87a des Relais 5 unterbrochen. Der Grund dafür ist, dass das Impulsrelais 4 auf jeden Stromstoss in die alternative Schaltstellung wechselt, d.h. aus der Schalterstellung "EIN" in "AUS" oder umgekehrt. Somit wird der Anlasseer 6 solange betätigt, bis der Tastschalter 3 in der beschriebenen Schaltung gedrückt bleibt. Wird der Tastschalter erneut gedrückt, dann bewirkt die Erregung des Impulsrelais 4 die Oeffnung der Kontakte 87, 87a und 88, 88a. Somit wird die Zündung unterbrochen und der Motor gestoppt. Die Anordnung des Tastschalters wird bei einem Kraftfahrzeug mit automatischem Getriebe serienmässig mit Vorteil im Griff des Wählhebels 7 so vorgenommen, dass die Drucktaste 3' aus der linken Seitenfläche vom Griff des Wählhebels 7 herausragt (vgl. Fig. 2). Bei Kraftfahrzeugen, die mit der Stop-Start-Automatik so nachgerüstet werden sollen, dass die Integration der Bedienbarkeit des Schalters für diese Automatik ermöglicht wird, ist in Fig. 3 zu sehen. Dabei wird die sich in Box 10 befindliche Steuerung, die beispielsweise aus dem Impulsrelais 4 und dem Relais 5 besteht, an die Mittelkonsole 11 des Kraftfahrzeuges so befestigt, dass der daraus heraus geführte Arm 8, der in den Tastschalter 3 resp. dessen Drucktaste 3' endet, mit Hilfe der Verbindungsbrücke 9 vom Wahlhebel 7 mitgeführt wird. Die Bedienung des Tastschalters 3 resp. dessen Drucktaste 3' kann dabei von der äusseren Seite des Daumens des Kraftfahrers bei gleichzeitiger Wahl der Getriebestellung am Wahlhebelgriff 7 erfolgen. Schliesslich wird in Figur 4 der serienmässig integrierte Tastschalter 3 im Knüppelgriff 12 eines Schalthebels gezeigt, wobei die Bedienung der Drucktaste 3' mit den Fingerbeeren des Daumens bei gleichzeitiger Betätigung des Knüppelgriffes 12 mit der Hand geschieht. Nebst dem Mitführen des Tastschalters 3 wird die integrierte Bedienbarkeit durch feste Installation von mehreren Tastschaltern 3 in der gleiche Schaltung ermöglicht, indem diese Tastschalter 3 zueinander parallel angeschlossen sind, und in der Nähe des Wählhebelgriffes 7 oder des Knüppelgriffes 12 so angeordnet sind, dass der Kraftfahrer mit seinem Daumen in der jeweiligen Position die Drucktasten 3' erreichen und betätigen kann.

**Patentansprüche**

1. Schalter für Stop-Start-Automatik (3) von Benzin- oder Gasmotoren in Kraftfahrzeugen, gekennzeichnet durch die Integration der Bedienbarkeit des Schalters zusammen mit einem Bedienungshebel (7, 12) für den Fahrzeuglenker, damit die Betätigung des Schalters zusammen mit dem Bedienungshebel erfolgen kann.

2. Schalter (3) nach Patentanspruch 1, dadurch gekennzeichnet, dass der Schalter (3) als Drucktastenschalter ausgeführt wird.

3. Schalter (3) nach Patentanspruch 1, dadurch gekennzeichnet, dass die Anordnung des Schalters (3) in den Schalt- oder Wählhebel (12, 7) der Fahrzeuggtriebe erfolgt.

4. Schalter (3) nach Patentanspruch 1, dadurch gekennzeichnet, dass der Schalter (3) in einen vom Wählhebel (7) mitgeführten Bedienungshebel (8) eingebaut wird.

5. Schalter (3) nach Patenanspruch 1, dadurch gekennzeichnet, dass die Anordnung des Schalters (3) in den Hebel der Handbremse vorgenommen wird.

6. Schalter (3) nach Patenanspruch 1, dadurch gekennzeichnet, dass der Schalter (3) in einen vom Hebel der Handbremse mitgeführten Bedienungshebel eingebaut wird.

7. Vorrichtung zum Stoppen und Starten von Benzin- oder Gasmotoren in Kraftfahrzeugen mit einem Schalter (3) nach den Ansprüchen 1 bis 6, wobei durch den Schalter (3) ein remanent wirkendes Impulsrelais (4) für das Zu- oder Abschalten der Zündung (2) und dazu parallel die Erregerspule eines Relais (5) als Schliesser zum Treiben des Anlassers (6) geschaltet wird.

8. Vorrichtung zum Stoppen und Starten von Benzin- oder Gasmotoren in Kraftfahrzeugen mit einem Schalter (3) nach Anspruch 7, dadurch gekennzeichnet, dass die Stromzuführung der Erregerspule des Relais (5) für das Treiben des Anlassers zeitlich verzögert wird.

9. Vorrichtung zum Stoppen und Starten von Benzin- oder Gasmotoren in Kraftfahrzeugen nach den Ansprüchen 1, 2, 7, 8, gekennzeichnet, durch mehrere Schalter (3), die in der Nähe eines Bedienungshebels (7, 12) so installiert sind, dass ein Schalter (3) aus der jeweiligen Bedienungsposition des Bedienungshebels von der gleichen Hand des Kraftfahrers mitbe- tätigt werden kann.

Fig. 1

Fig. 2

Fig. 3

Fig. 4

Fig. 1a

Fig. 1b

Fig. 2

Fig. 3

Fig. 4

## EINSCHLÄGIGE DOKUMENTE

EP 88810593.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 2 615 029 (WOLFF)<br>* Gesamt *<br><br>-- | 1-3 | F 02 N 11/08<br>B 60 K 20/00 |
| Y<br>A | EP - A1 - 0 031 165 (WEIMER)<br>* Zusammenfassung<br><br>-- | 1-3<br>7,8 | |
| A | DE - A1 - 3 113 215 (GROTEFELD)<br>* Gesamt *<br><br>-- | 1 | |
| A | DE - A1 - 2 943 482 (SEIBERT)<br>* Gesamt *<br><br>-- | 1 | |
| A | US - A - 2 557 887 (NOLAN)<br>* Fig. 1 *<br><br>-- | 1,3 | |

**RECHERCHIERTE SACHGEBIETE (Int. Cl.4)**

| Kategorie | Kennzeichnung | Betrifft | |
|---|---|---|---|
| A | GB - A - 2 127 100 (SELLEY)<br>* Gesamt *<br><br>-- | 1,5,6 | B 60 K<br>F 02 N |
| A | US - A - 3 941 009 (BROWN)<br>* Fig. 2 *<br><br>---- | 1,4 | |

Der vorliegende Recherchenbericht wurde für alle Patentansprüche erstellt.

| Recherchenort | Abschlußdatum der Recherche | Prüfer |
|---|---|---|
| WIEN | 17-11-1988 | KREHAN |